# EUROPEAN PATENT APPLICATION

(11) **EP 2 701 092 A1**
(43) Date of publication of application: **26.02.2014**
(21) Application number: 13171197.0
(22) Date of filing: 10.06.2013
(51) Int. Cl.: G06F 21/55

(54) **Method for identifying malicious executables**

(30) Priority: 20.08.2012 US 201213589660
(71) Applicant: Trusteer Ltd., 67442 Tel Aviv (IL)
(72) Inventor: Klein, Amit, 46433 Herzliya (IL); Boodaei, Michael, 53633 Givatayim (IL)
(74) Representative: Lampis, Marco

(57) **Abstract**

In a computer system, a method for detecting a suspected malware behavior, according to which a plurality of activities on a computer system that were conducted within a given time frame are monitored during the installation of a suspected file. The monitored activities are recorded and the monitored/recorded activities are compared with patterns of malware behavior, stored in a database. Upon detecting a suspicious program, the recorded monitored activities are provided for further analysis to be performed by appropriate software removal tools.

## Description

### Field of the Invention

The present invention relates to the field of Internet security. More particularly, the invention relates to a method for providing more secure browsing and preventing the theft of online sensitive information.

### Background of the invention

As the web browser is becoming the most frequently used application on a personal computer, and as more user confidential data is being entered through the web browser, such as banking and shopping transactions, malicious attacks are being increasingly focused on the web browser. There is an increasing number of malicious exploits that can install malicious code, such that a malicious browser extension persists on a target computer system. For a malicious browser extension to persist on a computer system, typically a malicious file is created so that the malicious extension persists on the disk, and a registry entry associated with the malicious browser extension is created to notify the web browser that a browser extension has been registered with the operating system.

Thus, for example, if a user enters user confidential data into a form field of a web page, and a malicious browser extension is present on the web browser, when the malicious browser extension receives an event, the malicious browser extension potentially has the ability to access and modify the content of the event. For example, the malicious browser can copy or modify the user confidential data, such as a bank account routing number in the post data parameter of the event, resulting in compromise of the user confidential data. One method employed by malware to persist is to manipulate the system registry, so as to make sure they run after restart (i.e., reboot survival). The Windows registry is a central hierarchical database managed by the operating system to store configuration information for users, applications, and devices.

Malware must manipulate the registry because it is the primary way to start a process running at boot time. As the computer boots the Windows® OS, for example, will interrogate the startup keys and load whatever process is described. Thus, malware often manipulates the registry to ensure that it is loaded at boot time. Because the malware's lifetime is dependent on registry keys within the registry, it will go to great lengths to ensure that its registry keys are not modified or moved. Malware may hide itself from being shown in the application process list or it might change its file names, registry keys, or key values during the reboot process. Malware may attempt to prevent its removal by continuously rewriting its registry keys to the registry. These tactics pose a problem for anti-virus software, and can go undetected by currently available techniques which simply remove registry keys without taking into account these interdependencies.

Normally, browsers do not check the executables for a digital signature before they are downloaded. Even though these executables are downloaded the browsers do not execute them. However, there are malware types that operate via vulnerability points such as the browser exploits ( an attack during which a browser navigates to a malicious page that manages to run native code inside the browser as a result of exploiting a browser vulnerability), which allow the browser to download executables in a different way.

It is therefore an object of the present invention to provide a system which is capable of detecting behavior associated with a malware without fully tracking the malware processes.

It is another object of the present invention to provide a system which is capable of detecting behavior associated with a malware, with lower probability for false positive indications.

Other objects and advantages of the invention will become apparent as the description proceeds.

### Summary of the Invention

The present invention is directed to a method for detecting a suspected malware behavior, according to which a plurality of activities on a computer system that were conducted within a given time frame are monitored during the installation process of a suspected file. The monitored activities are recorded and the monitored or recorded activities are compared with patterns of malware behavior, stored in a database. Upon detecting a suspicious program, the recorded monitored activities are provided for further analysis to be performed by appropriate software removal tools.

The activities may include at least one local computer system activity or at least one network activity.

The recorded monitored activities may be normalized to corresponding normalized actions. Each normalized activity may be mapped to a corresponding malware behavior pattern.

The present invention is also directed to a method for performing analysis of malware behavior, comprising the steps of:
a. receiving monitored activities that were conducted within a time frame, prior to a suspected malware infection on the computer system; and
b. comparing the monitored activities to patterns of malware behavior , stored in a database and tagging similar activities as being suspicious.

A malware state may be assigned to each activity tagged as being suspicious. The activities tagged as being suspicious may be provided for analysis.

The present invention is also directed to a computer-readable medium whose contents allows a computing system to:
a. monitor a plurality of activities during a time-bounded snapshot, the time-bounded snapshot containing the monitored activities that were conducted within a time frame;
b. record the monitored activities, in response to a notification of a suspected malware behavior,
wherein the notification of the suspected malware infection is provided by anti-malware software.

### Brief Description of the Drawings

In the drawings:

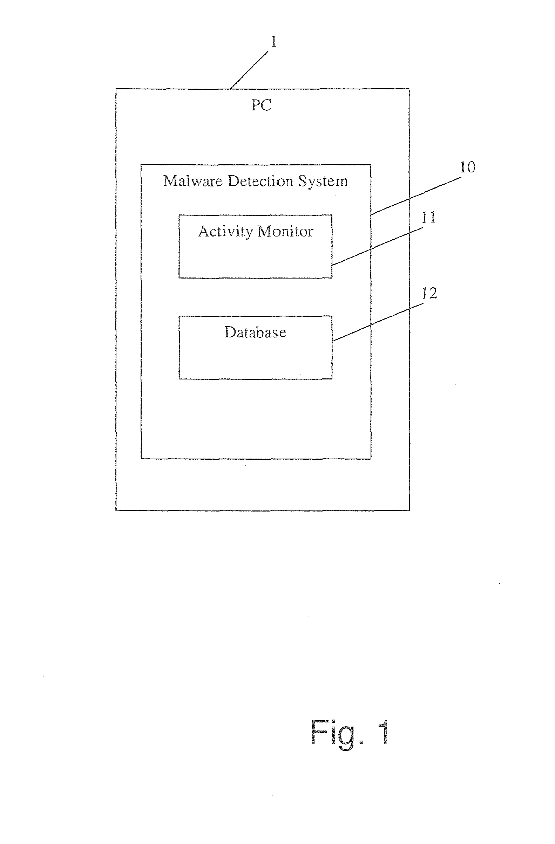

- Fig. 1 is a flow chart generally illustrating the method of the invention.

### Detailed Description of Preferred Embodiments

Reference will now be made to several embodiments of the present invention(s), examples of which are illustrated in the accompanying figures. Wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

Unless otherwise indicated, the functions described herein may be performed by executable code and instructions stored in computer readable medium and running on one or more processor-based systems. However, state machines, and/or hardwired electronic circuits can also be utilized. Further, with respect to the example processes described herein, not all the process states need to be reached, nor do the states have to be performed in the illustrated order. Various terms are used throughout the description and the claims which should have conventional meanings to those with a pertinent understanding of computer programming in general. Other terms will perhaps be more familiar to those more particular conversant in multithreaded programming and Windows Operating System (OS). Additionally, various descriptive terms are used in describing the exemplary embodiments in order to facilitate an explanation of them, and to aid one's understanding. However, while the description to follow may entail terminology which is perhaps tailored to certain computing or programming environments or to the various embodiments themselves, the ordinarily skilled artisan will appreciate that such terminology is employed in a descriptive sense and not a limiting sense. Where a confined meaning of a term is intended, it will be explicitly set forth or otherwise apparent from the disclosure.

Similarly, while certain examples may refer to a Personal Computer (PC) system, other computer or electronic systems can be used as well, such as, without limitation, a network-enabled personal digital assistant (PDA), a smart phone, and so on.

The term "malware" refers herein to any program or file that is harmful to a computer user (viruses, worms, Trojan horses) as well as to a program that collects information about a computer user without permission. Further herein, malicious activity is any activity resulting from the execution of malicious code. Embodiments in accordance with the invention detect installation attempts of malwares. When such events are detected, a determination is made by the system of the present invention whether that software code is a malware.

The present invention relates to a method and system for providing automatic detection of malware behavior among new binaries and/or executables that have never been encountered before on the target machine. In some embodiments, the malware detection system executes on a computer system or device, such as a desktop computer system, a server, etc., and monitors for common operating system and network activities that lead to the installation of malware. In order to detect a suspected malware behavior, the malware detection system provides a "snapshot" of the activities that were conducted within a specified time frame during the execution of a suspected file or program for analysis. For example, the malware detection system can provide a snapshot of the first 10 Sec of the monitored activities (e.g., local system activity, network activity, etc.) prior to the complete installation of the suspected program. Generally, monitoring is made on a subset of several basic criteria, such as an executable with no digital signature, an executable with file size < 1 MB (generally, the file size of a legitimate software is > 1MB), etc. In addition, the time frame should not be too long, since during a relatively long time frame, a legitimate installation may run in parallel to the inspected executable installation (for example, the browser may install a legitimate DLL) and generate suspicious indications, which will be difficult to discriminate.

According to an embodiment of the present invention, the malware detection system can provide the snapshot of the activities. Alternatively, the system may monitor suspicious events following execution of a new binary, and block its execution (without the snapshot) or even flag it as suspicious to a remote database. During that time frame, activities such as patches (in this case, hooks that are placed on various process functions in order to hijack the flow and potentially modify the behavior of these functions in runtime) which are not associated with legitimate products (such as security products) or security events are monitored, so as to obtain indications regarding suspicious system activities.

The monitored activities can then be analyzed to determine whether an executable file is a malware. The activities and file properties according to which a file is determined as a malware, may include, for example, what operating system objects were manipulated, the size of the file, file's signature (if exist), and the like.

In some embodiments, the malware detection system monitors the activities that were conducted within a specified time frame during the first few seconds of the installation of a suspected executable file. Optionally, a user can use the result of the analysis to manually decide whether a specific program is a threat. In some embodiments, the malware detection system may apply a state model for malware to normalize and categorize the monitored activities to aid in generating a central self-learning malware system. For example, a central malware detection system may perform commonality analysis (analysis of the degree of similarity between activities in machines or systems) on the normalized activities (activities that are stable with respect to a defined set of anticipated changes) to find any recurring activities. Once the malware detection system discovers what the commonality is between different captured time frame activities in different computer systems, the central system may indicate that each of the several infected computer systems visited the same web site prior to being infected. Here, the malware detection system may determine that this web site most likely served the malware to each of the infected computer systems, and may "block" this web site.

A representative computing environment for use in implementing aspects of the invention may be appreciate with initial reference to Fig. 1. Representative computing environment may utilize a general purpose computer system for executing applications in accordance with the described teachings.

Fig. 1 schematically illustrates in a block diagram form selected components of a malware detection system 10, according to an embodiment of the present invention. The malware detection system 10 resides at least partially within a computer system 1 (e.g., a PC) and it comprises an activity monitor unit 11, a malware behavior database 12. One skilled in the art will appreciate that the malware detection system10 may be deployed in other ways. For example, a remotely executing system activity monitor may remotely monitor the activities on certain types of computer systems, such as network devices.

In this embodiment, the activity monitor 11 provides runtime monitoring of the operating system resources for changes to the file system, configurations (registry), network activities, use of common Application Program Interfaces (APIs), or any other operating system object, during a predefined time frame of the initial installation activities of a suspected file or program. The activity monitor unit 11 may run on and monitor the activity of the computer system 1, such as, by way of example, a local desktop operating system. While executing, the activity monitor unit 11 records the monitored activities in a data store, which may be in memory, on physical media, or other logical data store. The activity monitor 11 may be configured to record information regarding the installation activities occurred during the predefined time frame, such as, by way of example: the executable file properties (e.g., file size, file signature, etc.), the identified operating system object involved in the monitored activity (e.g., file name, socket, IP address, logical paths, etc.); the details of the change; the source(s) of the change (e.g., process id, the API call used to make the change, etc). The activity monitor 11 creates and provides a time-bounded snapshot of activities that occurred during the installation of a suspected program.

The system 10 processes the monitored activities that are provided by the system activity monitor unit 11. In some embodiments, the system 10 compares the monitored activities with malware patterns that are stored in the database 12, as the reference for pre-infection activities. The malware state model may comprise a multiple number of different malware states, and the system 10 may intelligently map each activity in the snapshot to a malware state. Comparing the monitored activities to the stored malware states can aid in determining the sequence of events that define a program as a malware.

According to some embodiments, the system 10 provides the monitored activities from each specific computer system to a central analysis system (not shown). The central analysis system compares the monitored activities in order to differentiate the activities that might be related to the same malware behavior. In some embodiments, upon every comparison, the central system, upon performing a comparison of the monitored activities as obtained from plurality of computer systems, labels or tags the like-activities (i.e., duplicates) as "suspicious" with a given or specified malware state, and the unlike activities or events as "potentially normal." The activities that are tagged as potentially normal can be later filtered. The central system may provide the results of its processing to other local malware detection systems.

The activity monitor 11 may execute as a runtime process that may use any of a variety of well-known monitoring techniques to monitor operating system and/or network activities. According to some embodiments, the activity monitor 11 monitors predetermined activities on or about the computer system 1. Optionally, the activity monitor 11 records the monitored activities. In one embodiment, the activity monitor 11 may record the activities in a sequential or circular data store in a memory or other logical data store. Accordingly, system 10 determines whether it received notification of a suspected malware behavior. If no notification is received, the activity monitor 11 waits to a new file to be executed (i.e., to start a new installation). In case a notification of a suspected malware behavior is received, then, the system 10 may notify the user or any available anti-virus software. The amount of monitored activities to include in the time frame (e.g., the X seconds) may be specified by an administrator in a policy associated with the system 10.

The security application should be capable of being called from an application or from the operating system. During the monitored time frame, it is also possible to use common protective tools, such as a firewall, for obtaining indications regarding suspicious activities. For example, a firewall may send the user an alert that the browser attempts reaching an unknown website without any corresponding action of the user.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

## Claims

1. In a computer system, method for detecting a suspected malware behavior, comprising:
a. monitoring a plurality of activities on said computer system that were conducted within a given time frame during the installation process of a suspected file;
b. recording the monitored activities;
c. comparing said monitored or recorded activities with patterns of malware behavior, that are stored in a database; and
d. upon detecting a suspicious program, providing the recorded monitored activities for further analysis to be performed by appropriate software removal tools.

2. The method of claim 1, wherein the activities include at least one local computer system activity.

3. The method of claim 1, wherein the activities include at least one network activity.

4. The method of claim 1, further comprising normalizing the recorded monitored activities to corresponding normalized actions.

5. The method of claim 1, further comprising mapping each normalized activity to a corresponding malware behavior pattern.

6. A method in a computer system for performing analysis of malware behavior, comprising the steps of:
c. receiving monitored activities that were conducted within a time frame, prior to a suspected malware infection on said computer system; and
d. comparing the monitored activities to patterns of malware behavior , stored in a database and tagging similar activities as being suspicious.

7. The method of claim 6, further comprising assigning a malware state to each activity tagged as being suspicious.

8. The method of claim 6, further comprising providing the activities tagged as being suspicious for analysis.

9. A computer-readable medium whose contents allows a computing system to:
c. monitor a plurality of activities during a time-bounded snapshot, the time-bounded snapshot containing the monitored activities that were conducted within a time frame;
d. record said monitored activities, in response to a notification of a suspected malware behavior,
wherein the notification of the suspected malware infection is provided by anti-malware software.
